# EUROPÄISCHE PATENTANMELDUNG

(11) **EP 3 375 760 A1**
(43) Veröffentlichungstag der Anmeldung: **19.09.2018**
(21) Anmeldenummer: 18161472.8
(22) Anmeldetag: 13.03.2018
(51) Int. Cl.: C02F 1/52, C02F 1/66, C02F 101/10, C02F 103/32, C02F 1/42, C02F 1/44

(54) **VERFAHREN ZUR FÄLLUNG VON PHOSPHOR UND NATRIUM IN ABWASSER**

(30) Priorität: 13.03.2017 DE 102017105269; 20.04.2017 DE 102017108416
(71) Anmelder: Clemens, Joachim, 53229 Bonn (DE)
(72) Erfinder: CLEMENS, Joachim, 53229 Bonn (DE); OEPPERT, Christine, 02694 Crosta (DE)
(74) Vertreter: Lenzing Gerber Stute

(57) **Zusammenfassung**

Die Erfindung betrifft ein Verfahren zur Behandlung von Abwasser mittels Fällung von natriumhaltigen Magnesiumphosphaten (MNP) mit folgenden Verfahrensschritten:
a) Bereitstellen von wenigstens einem Abwasser enthaltend Natrium und Phosphor, wobei der Gehalt an Natrium größer ist als die Summe der Gehalte an Kalium und NH₄, jeweils gemessen in Mol pro Liter (mol/l)
b) Einstellen eines pH-Wertes von pH > 7,
c) Zugabe einer wasserlöslichen Magnesiumverbindung,
d) Ausfällen von MNP.

## Beschreibung

Die vorliegende Erfindung betrifft ein Verfahren zur Behandlung von Abwasser, das Natrium und Phosphor enthält, und insbesondere von Abwasser, dessen Gehalt an Natrium größer ist als die Summe von Kalium und Ammonium. Außerdem betrifft die Erfindung einen mineralischen Dünger, der Natrium und Phosphor enthält.

In der Abwasserbehandlung ist es bekannt, Phosphor mit Ammonium in Form der Verbindung MgNH₄PO₄*6H₂O, häufig auch MAP genannt, auszufällen. Das von dieser Verbindung gebildete Mineral heißt Magnesiumammoniumphosphat und gehört der Struvitgruppe an. Zur Struvitgruppe gehören auch die Verbindungen MgKPO₄*6H₂O, MgNaPO₄*7H₂O und (KNaMg)₂(PO₄)₂*14 H₂O Die Fällung erfolgt unter Ausnutzung des im Abwasser im Allgemeinen auch enthaltenen Ammoniums durch Zugabe einer wasserlöslichen Magnesiumverbindung, zum Beispiel von Magnesiumhydroxid. Obwohl Magnesiumhydroxid eine sehr kostspielige Magnesiumquelle ist, wird dieses oft verwendet, um das Abwasser in dem für die Fällung geeigneten pH-Bereich zu halten. Bei preiswerteren Salzen wie Magnesiumchlorid tritt demgegenüber eine Absenkung des pH-Werts ein, die die Fällung als Struvit behindert.

Das Ausfällen von Phosphor als MAP wird beispielsweise beschrieben in der DE 10 2008 050 349 A1 und in der DE 10 2007 035 910 B4.

Ein weiteres Fällungsverfahren zur Phosphorfällung nutzt die Verbindung MgKPO₄*6H₂O, die auch MKP genannt wird. Bei dieser Fällung wird anstelle eines Ammonium-Ions ein Kalium-Ion gebunden. Die Fällung von Phosphor und Kalium als MKP wird beschrieben in der EP 0114038 A2, der EP 2635534 B1 und der DE 10 2014 207 842 B3.

Ein Reaktor zur Gewinnung von MAP-Kristallen aus einem Abwasserstrom und ein entsprechendes Verfahren sind aus der DE 10 2013 007 076 A1 bekannt.

Keines der genannten Dokumente befasst sich mit der bevorzugten Bildung von natriumhaltigen Struviten wie z.B. (KNaMg)2(PO4)2*14 H2O oder MgNaPO₄*7H₂O. Nachfolgend werden diese Mineralien MNP genannt. Die Fällung dieses Minerals zur Rückgewinnung von Phosphor und Natrium in kristalliner Form ist aus mehreren Gründen vorteilhaft. Zum einen sind natriumhaltige Dünger vor allen Dingen für die Anwendung im Grünland vorteilhaft, da sie die Schmackhaftigkeit des Grases positiv beeinflussen. Bei halophilen Pflanzen fördert Natrium das Wachstum, z.B. fördert Natrium bei der Zuckerrübe die Bildung von Fruktose und deren Umwandlung in Glucose, die wiederum in den Rübenkörper eingelagert wird. Zum anderen ist Natrium als einwertiges Ion nur mit aufwändigen Mitteln aus einem Abwasserstrom zu entfernen. Die Fällung als MNP stellt hier eine vorteilhafte Möglichkeit dar, Abwässer mit hohen Natriumkonzentrationen zu reinigen.

Es ist deshalb Aufgabe der vorliegenden Erfindung, ein Verfahren zur Behandlung von Abwasser mittels Fällung von MNP zu schaffen. Diese Aufgabe wird von einem Verfahren mit den Merkmalen des Anspruchs 1 gelöst.

Außerdem soll ein neuartiges mineralisches Düngemittel geschaffen werden. Diese Aufgabe wird von einem Düngemittel mit den Merkmalen des Anspruchs 15 gelöst.

Bei dem neuen Verfahren wird zunächst wenigstens ein Abwasser bereitgestellt, das Natrium und Phosphor enthält, wobei der Gehalt an Natrium größer ist als die Summe der Gehalte an Kalium und Ammonium (NH₄). Die Gehalte sind jeweils gemessen in Mol pro Liter (mol/l). Hier können auch mehrere Abwässer bereitgestellt werden, insbesondere beispielsweise zwei Abwässer, von denen eines einen hohen Natriumgehalt und das andere einen hohen Phosphorgehalt aufweisen kann. In dem Abwasser wird dann ein pH-Wert im alkalischen Bereich eingestellt, also pH>7. Weiter wird eine wasserlösliche Magnesiumverbindung zugegeben und dann das Ausfällen von MNP bewirkt. Die Magnesiumverbindung kann dabei in fester Form oder bereits in Form einer wässrigen Lösung zugegeben werden. Das Kristallwachstum kann durch langsames Rühren, Temperatursteuerung und ausreichend lange Kristallisationszeit gefördert werden. Die MNP-Kristalle fallen ab einer gewissen Größe durch Gravitationswirkung aus, da die Dichte von etwa 1,6 größer ist als die Dichte des Abwassers. Bei geeigneter Anlagentechnik kann das MNP dann als kristallhaltiger Schlamm oder auch in kristalliner Form abgezogen werden.

Vorzugsweise werden ein erstes Abwasser AA mit einem pH-Wert von pH>7 und ein zweites Abwasser AK mit einem pH-Wert von pH<7 bereitgestellt. Diese Abwässer können dann so gemischt werden, dass sich ein gewünschter pH-Wert ganz oder annähernd durch Mischung der beiden Abwässer einstellt. Vorzugsweise wird durch das Mischen der Abwässer AA und AK bereits ein pH-Wert zwischen 8 und 10 eingestellt. Die Einstellung kann durch dosiertes Mischen der Abwässer vorgenommen werden, so dass in diesem Schritt noch keine Reagenzien zugegeben werden müssen.

Wenn der pH-Wert ausreichend hoch ist, kann die wasserlösliche Magnesiumverbindung ein Magnesiumsalz, vorzugsweise Magnesiumchlorid MgCl₂ oder Magnesiumsulfat MgSO₄, oder eine Mischung daraus, sein. Diese Salze sind relativ preiswert im Vergleich zu Magnesiumhydroxyd, sie werden aber bei herkömmlichen Verfahren selten eingesetzt, da sie den pH-Wert in unerwünschter Weise senken. Die Zugabe dieser Magnesiumsalze wird möglich, wenn der pH-Wert eingangs ausreichend hoch eingestellt wurde. Bevorzugt wird der pH-Wert zu Beginn des Verfahrens auf einen Wert von mehr als 8,5 und insbesondere mehr als 9,0 eingestellt. In einer besonders bevorzugten Ausführungsform wird der pH-Wert auf einen Wert von mindestens 8,5 und insbesondere mindestens 9,0 während der Zugabe der Magnesiumsalze stabilisiert. Dies kann erfolgen, indem alkalisches Abwasser zudosiert wird und der pH-Wert dadurch hoch gehalten wird. Besonders geeignet hierfür sind Abwässer mit pH-Werten von 11 oder mehr.

Es kann aber auch vorgesehen sein, dass NaOH, Na₂CO₃ oder eine alkalische Lösung zugegeben werden. NaOH und Na₂CO₃ sind relativ preiswerte Reagenzien. Bei dem vorliegenden Verfahren ist der Natriumgehalt dieser Reagenzien nicht störend, da Natrium ein Element des angestrebten Produkts ist.

Das Abwasser AA ist vorzugsweise der Ablauf eines Anionentauschers. Das Abwasser AK ist vorzugsweise der Ablauf eines Kationentauschers oder einer Umkehrosmose. Beide Abwässer können aus einem milchverarbeitenden Betrieb stammen.

Die Zugabe des Magnesiumsalzes erfolgt bevorzugt so, dass ein stöchiometrisches Verhältnis Mg zu PO₄ eingestellt wird, das zwischen 1,0 und 2,0 liegt, vorzugsweise zwischen 1,2 und 1,8 und insbesondere zwischen 1,4 und 1,6. Das Magnesium wird also stöchiometrisch oder leicht überdosiert im Verhältnis zum Phosphat zugegeben. Besonders bevorzugt wird ein Verhältnis Mg zu PO₄ von 1,5.

Vorzugsweise wird auch das stöchiometrische Verhältnis Natrium zu Phosphat auf einen Wert zwischen 0,9 und 1,1 eingestellt. Dieses stöchiometrische Verhältnis zwischen Natrium und Phosphat kann, je nach Bedarf, durch Zudosierung von Abwasser oder Gülle eingestellt werden, das entweder Natriumüberschuss oder Phosphatüberschuss aufweist. Wenn diese Schritte nicht durchgeführt werden sollen, kann das Verfahren aber z.B. auch in Abwasser mit Natriumüberschuss durchgeführt werden. Das stöchiometrische Verhältnis zwischen Natrium und Phosphat kann bei Natriummangel aber auch durch Zugabe von NaOH oder Na₂CO₃ eingestellt werden.

Das neuartige Düngemittel ist ein mineralischer Dünger enthaltend MgNaPO₄*7H₂O und/oder (KNaMg)₂(PO₄)₂*14 H₂O, hergestellt mittels eines Verfahren wie oben beschrieben.

Nachfolgend werden ein Verfahrensbeispiel und ein Versuchsergebnis beschrieben, die die Durchführung des beschriebenen Verfahrens darstellen.

Bei dem Verfahrensbeispiel soll von den Abwässern eines milchverarbeitenden Betriebs ausgegangen werden, wobei ein erster Abwasserstrom das Abwasser AA am Ausgang eines Anionentauschers liefert, während ein zweiter Abwasserstrom das Abwasser AK am Ausgang einer Umkehrosmose liefert. Zur Mineralisierung und Abwasserbehandlung werden im vorliegenden Fall Ionenaustauscher und Umkehrosmose eingesetzt, die zu Abwasserströmen mit hohen Kationen- und Anionenkonzentrationen führen. Die Abwässer weisen zum Teil sehr hohe oder niedrige pH-Werte auf. Die Abwasserströme werden separat gefasst und zur Abwasserbehandlungsanlage transportiert. Dies hat den Vorteil, dass man deren Abwasserinhaltsstoffe separat analysieren und falls erforderlich behandeln kann.

Diese Abwässer haben etwa die in der nachfolgenden Tabelle 1 aufgeführten Eigenschaften:

**Tabelle 1: Abwasserströme AA und AK**

| | AA | AK | | AA | AK |
|---|---|---|---|---|---|
| pH | 12 | 4,5 | | | |
| CSB (mg O₂/l) | 11.000 | 7.000 | | | |
| Pₒᵣₜₕₒ (mg/l) | 1.000 | 1.200 | P (mol/l) | 0,03 | 0,03 |
| NH₄ (mg/l) | | 120 | NH₄ (mol/l) | | 0,007 |
| Na⁺ (mg/l) | 8.000 | 3.000 | Na (mol/l) | 0,35 | 0,13 |
| K⁺ (mg/l) | | 1.800 | K (mol/l) | | 0,05 |

### Versuch zur pH-Abhängigkeit:

Diese Versuche zeigen den Einfluss des pH-Werts von Abwässern auf die P-Fällung. Die Tabelle zeigt die Konzentration einiger Inhaltsstoffe in drei Varianten. Die Variante AA wies einen pH von 12,1 auf, die beiden Mischvarianten AA+AK einen pH um etwa 8,7 auf. Nach der überstöchiometrischen Zugabe von Mg²⁺ in Form von MgCl₂ (Mg:Pₒᵣₜₕₒ = 1,5) betrug die P-Abscheidung (gemessen nach 12 Stunden) für die Variante 1 nur 49%, für die Varianten 2 und 3 etwa 94%. Unter dem Mikroskop stellten sich die Ausfällungen der Varianten 2 und 3 als typische Struvit-Kristalle dar.

| mmol/l | V1: AA | V2: AA + AK | V3: AA + AK |
|---|---|---|---|
| Na | 390 | 257 | 254 |
| K | 0,2 | 45 | 44 |
| Mg | 0,3 | 0,8 | 0,8 |
| Pₒᵣₜₕₒ | 40 | 48 | 48 |
| pH | 12,1 | 8,6 | 8,7 |

Durch die P-Fällung wurden 19 mmol P/l bei Variante 1 und 45 mmol P/l bei den Varianten 2 und 3 entfernt. Somit war die P-Fällung bei einem pH von 12,1 (Variante 1) nur zum Teil erfolgreich.

Bei einem pH von 8,6, der durch das Mischen der Abwässer eingestellt wurde und bei dem während der MgCl2-Zudosierung durch parallele Zudosierung von basischem Abwasser der pH-Wert ständig über 8,7 gehalten wurde, betrug die P-Elimination dagegen 94%.

Bei diesen Varianten 2 und 3 wurden nur 8 mmol K/l aus der flüssigen Phase entfernt, demgegenüber stand eine P-Reduktion von 45 mmol P/l. Somit ist davon auszugehen, dass die restlichen 37 mmol P/l durch die Bildung von MNP gefällt wurden.

Es darf deshalb erwartet werden, dass das erfindungsgemäße Verfahren in einem pH-Bereich zwischen pH = 8 und pH = 10 erfolgreich ausgeführt werden kann.

Das gefällte Mineral wurde mittels Röntgendiffraktometrie untersucht. Dabei wurde als Hauptphase das Struvitgruppenmineral Hazenite - (KNaMg)2(PO4)2*14 H2O- detektiert. Das ist überraschend, da das Mineral bisher als Mineral bezeichnet wurde, das durch mikrobielle Aktivität ausfällt. Dies war in den vorliegenden Versuchen aber nicht der Fall, da die Fällung innerhalb weniger Minuten stattfand.

Im hier betrachteten Fall liegt in den Abwasserströmen AA (Abwasser des Anionentauschers) und AK (Abwasser der Umkehrosmose) mehr als die Hälfte der täglichen P-Fracht vor. Die P-Konzentrationen sind deutlich höher (P≥ 1000 mg/l) als in einer herkömmlichen P-Fällungsstufe in der Aufbereitungsanlage (< 200 mg P/l). Darüber hinaus weist der Stoffstrom AA eine hohe Pufferkapazität auf.

In diesen Abwasserströmen ist eine P-Fällung in Form von MNP möglich. Ammonium wird hierzu nicht benötigt.

Gängige Struvit-Verfahren fällen in einem Abwasserstrom, der stark ammoniumhaltig ist und stöchiometrisch deutlich mehr NH₄-Stickstoff enthält als Phosphat, das Struvit durch Zugabe von Mg-Ionen aus. Die daher bekannte Reaktionsgleichung lautet:

NH₄+ + Mg²⁺ + PO₄³⁻ -> MgNH₄PO₄

Der pH-Wert der Reaktion sollte über 8 liegen, damit möglichst viel ortho-P in Form von PO₄³⁻ vorliegt. Bei zu hohen pH-Werten verlagert sich jedoch das Ammonium/Ammoniakgleichgewicht zu NH₃. NH₃ kann an der Fällungsreaktion nicht mehr teilnehmen (pKₛ =9,2).

In dem Fall der milchverarbeitenden Industrie entstehen jedoch Abwasserströme, in denen eine Fällung mit Na⁺ oder K⁺ möglich ist. So beträgt das stöchiometrische Verhältnis im Abwasser AA Na:P ca. 11. Der pH von 12 ist etwa so hoch wie der pKₛ₃ von Pₒᵣₜₕₒ (12,32), so dass etwa die Hälfte des Pₒᵣₜₕₒ bereits als PO₄³⁻ vorliegt.

Das stöchiometrische Verhältnis im Abwasser AK (Na+K+NH4):P beträgt etwa 8. Allerdings ist der pH-Wert ungeeignet für eine MAP-Fällung, MKP-Fällung oder MNP-Fällung, denn bei pH 4,5 liegt Pₒᵣₜₕₒ nur in Form von H₃PO₄ und H₂PO₄⁻ vor.

Die MNP-Fällung findet bei pH-Werten ab pH = 8 und höher statt. Es ist möglich, in das stark basische Abwasser des Abwasserstromes AA das saure Abwasser AK des Kationenaustauschers zuzudosieren, bis der pH-Wert bei etwa 9 liegt.

Im Anschluss ist es möglich, Mg-Salze zuzudosieren und die MNP-Fällung auszulösen.

Werden die Mg-Salze MgCl₂ und MgSO₄ gelöst, versauert die Lösung. Deshalb ist es auch möglich mit den o.g. Abwasserströmen einen höheren pH-Wert (über 8,5) einzustellen und dann MgCl₂ und MgSO₄ zuzudosieren, so dass der pH-Wert nicht nennenswert abfällt und MNP ausfallen kann. MgCl₂ und MgSO₄ sind preiswerter als die Mg-Quellen Mg(OH)₂ oder MgO.

In den Abwasserströmen ist Na⁺ das dominierende Kation. NH₄+ und K⁺ liegen in deutlich geringerer Konzentration vor. Zudem liegen bei hohen pH-Werten immer größere Mengen des gesamtammoniakalischen Stickstoffes (TAN = NH₄+ + NH₃) in Form von NH₃ vor und gasen unter Umständen aus.

Die Summe an anfallendem P beträgt bei diesem Beispiel pro Tag etwa 6,6 kmol P/d. Die Menge an K beträgt 6,9 kmol K/d und die Menge an Na 30 kmol Na/d.

### Vorteile des Verfahrens

Das Verfahren benötigt weniger Mg-Salze, da in den Abwasserströmen die P-Konzentrationen deutlich höher sind. Dadurch läuft das Verfahren stabiler.

Durch Mischung der Stoffströme AA und AK und aufgrund der hohen Pufferkapazität des Stoffstromes AA ist es möglich, zumindest zum Teil ein preiswertes Mg-Salz einzusetzen.

Eine MNP-Fällung reduziert neben P auch Na⁺ und K⁺ im Abwasserstrom. Na ist ebenso wie K ein Problemstoff in Kläranlagen, da beide aufgrund ihrer Einwertigkeit nur aufwändig dem Abwasser durch Membranverfahren zu entziehen sind. Dagegen kann Ammonium, das bei klassischen Verfahren als einwertiges Kation bei der Struvitfällung zum Einsatz kommt und mit gefällt wird, auch durch einfache biologische Verfahren oder ggf. durch Strippung dem Abwasser entzogen werden.

### Vergleichsversuch

Am 3.8.2016 wurde Abwasser AK aus einem Teilstrom untersucht:
100 g AK
Pₒᵣₜₕₒ: 1.220mg/l K: 1.660 mg/l pH: 4,5

Der pH Wert des Abwassers AK wurde mit 5 N NaOH auf pH = 9,5 eingestellt (etwa 1ml).

Im Anschluss wurde MgCl₂ leicht überdosiert im Verhältnis Mg:P = 1,1:1 zudosiert. Da MgCl₂ den pH-Wert absenkt, wurde während der Zudosierung der pH mit Hilfe NaOH zwischen 9 und 10 gehalten. Das Abwasser wurde mit Hilfe eines Magnetrührers in Bewegung gehalten.

Innerhalb von etwa 30 Minuten setzten sich MNP-Kristalle ab.

Im Anschluss waren im Überstand nur noch 17,7 mg Pₒᵣₜₕₒ/l und 951 mg K/l nachweisbar. Natrium konnte vor Ort nicht bestimmt werden.

Es wurde eine P-Abscheidung von 98% erreicht, es wurden also 0,038 mol P/l ausgefällt. Demgegenüber stehen nur 0,018 mol K/I, welches ausgefällt wurde. Der restliche kristalline Niederschlag muss demnach mittels Na⁺ in Form von MNP gefällt worden sein. Es wurden 0,020 mol Na/l für die Fällung benötigt. Ob in diesem Versuch Hazenite oder MgNaPO4*6H2O oder eine Mischung ausfiel, wurde nicht bestimmt.

Die gefällten Mineralien sind vorteilhaft als mineralischer Dünger enthaltend MgNaPO₄*7H₂O und/oder (KNaMg)₂(PO₄)₂*14 H₂O verwendbar, insbesondere in der Landwirtschaft. Sie zeichnen sich durch einen hohen Gehalt an Natrium und Phosphor aus. Die Wasserlöslichkeit und die biologische Verwertbarkeit sind so, dass die Mineralien für eine Pflanzenernährung besonders gut geeignet sind, insbesondere für Grünpflanzen.

## Patentansprüche

1. Verfahren zur Behandlung von Abwasser mittels Fällung von natriumhaltigen Phosphaten (MNP), insbesondere MgNaPO₄*7H₂O und/oder (KNaMg)₂(PO₄)₂*14 H₂O, mit folgenden Verfahrensschritten:
a) Bereitstellen von wenigstens einem Abwasser enthaltend Natrium und Phosphor, wobei der Gehalt an Natrium größer ist als die Summe der Gehalte an Kalium und NH₄, jeweils gemessen in Mol pro Liter (mol/l)
b) Einstellen eines pH-Wertes von pH > 7,
c) Zugabe einer wasserlöslichen Magnesiumverbindung,
d) Ausfällen von MNP.

2. Verfahren nach Anspruch 1, **dadurch gekennzeichnet, dass** im Schritt a) ein erstes Abwasser AA mit einem pH-Wert von pH>7 und ein zweites Abwasser AK mit einem pH-Wert von pH<7 bereitgestellt werden.

3. Verfahren nach Anspruch 1 oder 2, **dadurch gekennzeichnet, dass** im Schritt b) der pH-Wert eingestellt wird auf 8 < pH < 10.

4. Verfahren nach Anspruch 3, **dadurch gekennzeichnet, dass** der pH-Wert im Schritt b) durch dosiertes Mischen der Abwässer AA und AK eingestellt wird.

5. Verfahren nach einem der vorhergehenden Ansprüche, **dadurch gekennzeichnet, dass** im Schritt c) die Magnesiumverbindung ein Magnesiumsalz ist, vorzugsweise MgCl₂ und/oder MgSO₄.

6. Verfahren nach Anspruch 5, **dadurch gekennzeichnet, dass** vor der Zugabe von Magnesiumsalz der pH-Wert des Abwassers auf pH > 8,5 und vorzugsweise pH > 9,0 eingestellt wird.

7. Verfahren nach Anspruch 6, **dadurch gekennzeichnet, dass** während der Zugabe von Magnesiumsalz der pH-Wert des Abwassers auf pH > 8,5 und vorzugsweise pH > 9,0 gehalten wird.

8. Verfahren nach Anspruch 7, **dadurch gekennzeichnet, dass** der pH-Wert des Abwassers durch Zugabe einer alkalischen Lösung, Zugabe von NaOH, Zugabe von Na₂CO₃, und /oder Zugabe von alkalischem Abwasser, insbesondere Abwasser AA, gehalten wird.

9. Verfahren nach einem der vorhergehenden Ansprüche, **dadurch gekennzeichnet, dass** das Abwasser AA der Ablauf eines Anionentauschers ist.

10. Verfahren nach einem der vorhergehenden Ansprüche, **dadurch gekennzeichnet, dass** das Abwasser AK der Ablauf eines Kationentauschers oder einer Umkehrosmose ist.

11. Verfahren nach einem der vorhergehenden Ansprüche, **dadurch gekennzeichnet, dass** im Schritt c) ein stöchiometrisches Verhältnis von Mg zu PO₄ zwischen 1,0 und 2,0, insbesondere 1,2 bis 1,8 und vorzugsweise 1,4 bis 1,6 eingestellt wird.

12. Verfahren nach einem der vorhergehenden Ansprüche, **dadurch gekennzeichnet, dass** das in den Schritten b) und/oder c) das stöchiometrische Verhältnis von Na zu PO₄ auf 0,9 bis 1,1 eingestellt wird.

13. Verfahren nach Anspruch 12, **dadurch gekennzeichnet, dass** das stöchiometrische Verhältnis durch Zugabe, je nach Anforderung, von natriumhaltigem bzw. phosphathaltigem Abwasser oder Gülle eingestellt wird.

14. Verfahren nach Anspruch 12, **dadurch gekennzeichnet, dass** das stöchiometrische Verhältnis durch Zugabe von NaOH oder Na₂CO₃ eingestellt wird.

15. Mineralischer Dünger enthaltend MgNaPO₄*7H₂O und/oder (KNaMg)₂(PO₄)₂*14 H₂O, hergestellt mittels eines Verfahrens nach einem der vorhergehenden Ansprüche.
